Europäisches Patentamt

European Patent Office

Office européen des brevets

(11) Numéro de publication : **0 444 974 A1**

## (12) DEMANDE DE BREVET EUROPEEN

(21) Numéro de dépôt : **91400152.4**

(22) Date de dépôt : **24.01.91**

(51) Int. Cl.⁵ : **F16L 55/165, E21B 7/28, E21B 43/114**

(30) Priorité : **01.02.90 FR 9001199**
**19.06.90 FR 9007673**

(43) Date de publication de la demande :
**04.09.91 Bulletin 91/36**

(84) Etats contractants désignés :
**AT BE CH DE DK ES FR GB GR IT LI LU NL SE**

(71) Demandeur : **GAZ DE FRANCE**
**23, rue Philibert Delorme**
**F-75017 Paris (FR)**

(72) Inventeur : **Federspiel, Eric**
**4 Place Ch. De Gaulle**
**F-95210 Saint Gratien (FR)**
Inventeur : **Godefroy, Richard**
**41 Avenue Jean Moulin**
**F-93140 Bondy (FR)**

(74) Mandataire : **Thévenet, Jean-Bruno et al**
**Cabinet BEAU DE LOMENIE 55 rue**
**d'Amsterdam**
**F-75008 Paris (FR)**

(54) Procédé et dispositif de remplacement d'une canalisation enterrée.

(57)    Pour remplacer une première canalisation enterrée (3) telle qu'une canalisation métallique par une seconde canalisation de diamètre moyen sensiblement égal ou supérieur à celui de la première canalisation, on procède à une découpe longitudinale de la première canalisation (3) par une projection localisée d'un flux de matière, de particules ou de rayonnement grâce à des moyens (1) de projection localisée qui sont déplacés à l'intérieur de la première canalisation (3) afin de procéder à la division longitudinale de la première canalisation (3) en au moins deux segments.

La découpe par projection localisée évite notamment la création de vibrations lors de la fragmentation de la canalisation à remplacer.

# FIG.1

# PROCEDE ET DISPOSITIF DE REMPLACEMENT D'UNE CANALISATION ENTERREE

La présente invention concerne un procédé et un dispositif de remplacement d'une canalisation existante, enterrée, notamment une canalisation métallique, par une autre canalisation de diamètre égal ou supérieur à la canalisation existante.

Il est souvent nécessaire de procéder au remplacement de canalisations enterrées existantes faisant partie par exemple de réseaux de transport d'eau propre, d'eaux usées ou de gaz. Un remplacement de canalisation s'impose lorsque par exemple la canalisation existante est en mauvais état ou lorsque par suite d'une augmentation de la charge, la capacité de la canalisation existante n'est plus suffisante.

Une première et plus ancienne façon de remplacer des canalisations consiste à effectuer une excavation totale, coûteuse, qui perturbe beaucoup l'environnement surtout en milieu urbain dans la mesure où l'on doit détruire la chaussée et/ou le trottoir d'une rue.

Une autre façon de remplacer une canalisation existante, développée plus récemment de façon industrielle, consiste, pour éviter l'excavation, à introduire une nouvelle canalisation à l'intérieur de l'ancienne. Ceci implique bien entendu que la nouvelle canalisation présente un diamètre extérieur inférieur au diamètre intérieur de l'ancienne, d'où une réduction de la section de passage, ce qui empêche d'utiliser cette technique chaque fois que la capacité de transport doit être maintenue ou augmentée, sauf à modifier la pression du fluide véhiculé.

Une autre façon de remplacer une canalisation consiste à fragmenter in situ la canalisation au moyen d'un outil spécial, à repousser les fragments radialement vers l'extérieur, puis à introduire un nouveau tube dans l'espace ainsi créé. Cette technique est décrite notamment dans le document EP-A2-0094694 qui concerne un procédé d'insertion d'une nouvelle canalisation à la place d'une ancienne après éclatement de cette dernière et dans le document EP-B1-0053480 qui concerne des dispositifs particuliers pour la mise en oeuvre du procédé précité.

Dans la technique d'éclatement décrite dans les documents précités, un dispositif à percussion agit sur l'outil de fracturation mis en contact avec la canalisation existante afin de provoquer la fragmentation de celle-ci. La mise en oeuvre d'un outil à percussion provoque des vibrations qui peuvent perturber l'environnement immédiat de la conduite à remplacer, ce qui est gênant notamment lorsque plusieurs canalisations de nature différente sont enterrées à proximité les unes des autres.

De plus, la technique de l'éclatement n'est utilisable que dans le cas où la canalisation est suffisamment fragile et se trouve réalisée en un matériau tel que de la fonte grise par exemple, qui peut se casser facilement. Si, comme c'est généralement le cas, certains tronçons de canalisation ont fait l'objet de réparations et comprennent des matériaux différents plus résistants et non cassants, tels que de la fonte ductile ou de l'acier, l'outil de fracturation vient se bloquer sur ces tronçons non cassants qui ne sont généralement pas signalés sur les plans. L'outil peut lui-même être endommagé et de toute façon il est alors nécessaire de revenir à une méthode traditionnelle de fouille pour dégager l'outil et procéder à la fracturation ou au retrait du tronçon non cassant. Le fait d'interrompre de place en place la progression de l'outil de fracturation et de procéder alors à un creusement traditionnel dans le sol ralentit l'ensemble du processus et constitue ainsi une perte de temps et d'argent.

Par ailleurs, l'éclatement d'une conduite en une multiplicité de fragments susceptibles de venir obstruer le passage oblige à réaliser en une seule opération la fracturation, l'écartement des fragments de la canalisation éclatée, et la mise en place de la nouvelle canalisation. Ceci peut présenter des inconvénients dans le cas où la nouvelle canalisation à mettre en place n'est pas immédiatement disponible. En effet, il n'est alors pas possible de commencer de procéder à la destruction de la canalisation existante et d'effectuer la mise en place de la nouvelle canalisation dans une deuxième étape.

On connaît encore par le document US-A-3 181 302, un appareil destiné à remplacer une canalisation enterrée sensiblement horizontale. L'appareil comprend un outil de découpe constitué d'un certain nombre de disques coupants montés de façon à pouvoir tourner sur une barre de support, l'outil de découpe étant prévu pour être tiré dans la canalisation au moyen d'un câble de treuil de telle sorte que les disques fendent progressivement la canalisation en deux parties dans le sens longitudinal.

L'extrémité arrière de l'outil de découpe est reliée à un dispositif conique destiné à écarter l'une de l'autre les deux moitiés de canalisation découpées et une nouvelle conduite, reliée au dispositif écarteur, est engagée dans l'espace précédemment occupé par la canalisation existante.

Cette technique utilise un matériel lourd, sophistiqué et coûteux et nécessite un élément de traction ayant une très forte puissance car il doit provoquer la découpe de façon mécanique à l'aide des éléments coupants tractés, tout en entraînant également l'élément d'écartement et la nouvelle canalisation. Les appareils agissent donc souvent par à-coups, ce qui gêne la progression. Par ailleurs, la découpe mécanique conduit, dans le cas de matériaux cassants, à la production de fragments qui peuvent venir bloquer le mécanisme de découpe.

On connait par ailleurs divers procédés industriels de découpe de métaux dont certains, tels que l'oxycoupage, le coupage au plasma, le coupage au laser, le forage thermique, le coupage au chalumeau à poudre de fer, permettent d'échauffer le métal au-delà de sa température de fusion. On connaît également divers procédés industriels de découpe basés sur la projection localisée d'un fluide sous pression, ce dernier pouvant être homogène, par exemple de l'eau, ou non homogène, par exemple de l'eau contenant un agent abrasif tel que des particules minérales. Ces divers procédés n'ont cependant pas encore été appliqués à des travaux souterrains télécommandés de remplacement de canalisations enterrées.

La présente invention vise à remédier aux inconvénients précités et à permettre de réaliser in situ de façon continue et sans à-coups la découpe d'une canalisation enterrée, sans qu'il soit nécessaire de procéder à des excavations.

L'invention a encore pour but de permettre la découpe d'une canalisation existante en limitant les risques de blocage du dispositif de découpe.

L'invention vise également à permettre la mise en place d'une nouvelle canalisation de diamètre sensiblement égal ou supérieur à celui de la canalisation existante, au choix au cours d'une opération combinée à celle de la découpe de la canalisation existante ou lors d'une étape ultérieure distincte de l'opération de découpe, et sans qu'il soit nécessaire de procéder au retrait de la canalisation existante.

L'invention a encore pour objet de permettre de réaliser un remplacement de canalisation à l'aide d'un dispositif n'impliquant que des efforts de traction modérés, et à permettre un réglage aisé et le cas échéant auto-adaptatif des paramètres de fonctionnement du dispositif de découpe en fonction des caractéristiques de la canalisation existante.

Ces buts ainsi que d'autres qui ressortiront de la suite de la description sont atteints grâce à un procédé de remplacement d'une première canalisation enterrée, telle qu'une canalisation en matière métallique, plastique ou minérale par une seconde canalisation de diamètre moyen sensiblement égal ou supérieur à celui de ladite première canalisation, selon lequel des moyens de découpe sont déplacés à l'intérieur de la première canalisation afin de diviser longitudinalement ladite première canalisation en au moins deux segments, caractérisé en ce qu'il consiste à découper ladite première canalisation sur au moins une partie de son épaisseur par l'action localisée d'un flux de particules, de matière ou de rayonnement sur ladite première canalisation, grâce à des moyens de projection localisée qui sont déplacés à l'intérieur de la première canalisation afin de procéder à ladite division longitudinale de ladite première canalisation en au moins deux segments.

Le procédé consiste en outre à écarter et le cas échéant diviser lesdits segments découpés de ladite première canalisation afin de permettre l'introduction de ladite seconde canalisation destinée à remplacer ladite première canalisation.

L'écartement des segments découpés de la première canalisation peut être réalisé immédiatement après l'opération de découpe par projection localisée, au cours d'une même étape au cours de laquelle on fait progresser simultanément à l'intérieur de la première canalisation des moyens de projection localisée et des moyens d'écartement.

Toutefois, selon un autre mode de réalisation possible, on réalise la découpe de la première canalisation par projection localisée lors d'une première étape au cours de laquelle on fait progresser à l'intérieur de la première canalisation des moyens de projection localisée, et on réalise l'écartement des segments découpés de ladite première canalisation lors d'une étape ultérieure séparée de mise en place de la seconde canalisation, l'écartement des segments découpés étant réalisé à l'aide d'un moyen d'écartement introduit séparément dans la première canalisation après lesdits moyens de projection localisée et progressant à l'intérieur de la première canalisation découpée de façon indépendante desdits moyens de projection localisée.

Selon un mode particulier de réalisation, on insère dans ladite première canalisation fragmentée et écartée, un fourreau de protection dont la tête est tractée derrière ledit moyen d'écartement puis on introduit à l'intérieur dudit fourreau, dans une étape ultérieure, ladite seconde canalisation définitive à mettre en place.

Toutefois, selon un autre mode particulier de réalisation on insère directement dans ladite première canalisation fragmentée et écartée, ladite seconde canalisation définitive à mettre en place, dont la tête est tractée derrière ledit moyen d'écartement.

L'invention s'applique à des canalisations réalisées en matériaux divers, par exemple en métal ou alliage métallique, en matières plastiques ou minérales, en matériaux composites, et la projection localisée produisant le découpage de ladite première canalisation peut être réalisée grâce à un fluide homogène ou non homogène sous pression, selon la nature de ladite première canalisation, ainsi que par la projection de flux de matière, de particules ou de rayonnement provoquant une découpe par échauffement localisé sous l'action de la projection localisée dudit flux, le procédé mettant en oeuvre un échauffement localisé étant particulièrement adapté aux canalisations métalliques.

L'échauffement localisé produisant le découpage de ladite première canalisation peut être réalisé par oxy-

3

coupage, par un procédé de coupage au plasma d'arc, par un procédé de coupage par faisceau laser, par un procédé de forage thermique, ou encore par un procédé utilisant un chalumeau à poudre de fer.

L'invention concerne également un dispositif pour la mise en oeuvre du procédé visé ci-dessus, ce dispositif comprenant des moyens de découpe, des moyens d'écartement et des moyens d'entraînement, et étant plus particulièrement caractérisé en ce que lesdits moyens de découpe comprennent une tête essentiellement cylindrique pourvue sur sa surface latérale, d'au moins deux buses de découpe dont l'extrémité libre est orientée vers la paroi interne de ladite première canalisation, lesdites buses étant pourvues d'au moins un conduit interne destiné à diriger vers la surface à découper un moyen de découpe locale constitué par un flux de particules, de matière ou de rayonnement, au moins une borne étant prévue sur une face frontale de la tête pour permettre le raccord avec au moins un moyen d'alimentation du moyen de découpe locale appliqué par lesdites buses.

La tête de découpe peut comprendre au moins un élément d'accrochage situé sur la face frontale avant de la tête pour permettre la traction de ladite tête de découpe par lesdits moyens d'entraînement.

Les moyens d'écartement peuvent comprendre une partie avant essentiellement conique ou tronconique et un prolongement arrière cylindrique de diamètre D supérieur au diamètre d de la tête de découpe.

Selon un mode particulier de réalisation, le dispositif comprend au moins une première borne disposée sur une face frontale de la tête pour permettre le raccordement avec une conduite d'alimentation en fluide, et le fluide de découpe locale dirigé à travers les buses vers la paroi interne de la première canalisation est un jet d'eau directif.

Selon un autre mode particulier de réalisation, le dispositif comprend au moins une première borne disposée sur une face frontale de la tête pour permettre le raccordement avec une conduite d'alimentation en fluide et le fluide de découpe locale dirigé à travers les buses vers la paroi interne de la première canalisation est un jet directif constitué d'un mélange d'eau et de particules abrasives.

Selon un autre mode particulier de réalisation, le dispositif comprend au moins une première borne disposée sur une face frontale de la tête pour permettre le raccordement avec un câble d'alimentation en énergie électrique, et le moyen de découpe locale dirigé à travers les buses vers la paroi interne de la première canalisation est un faisceau laser.

Selon encore un autre mode particulier de réalisation, le dispositif comprend au moins une première borne disposée sur une face frontale de la tête pour permettre le raccordement avec un câble d'alimentation en énergie électrique et au moins une deuxième borne disposée sur une face frontale de la tête pour permettre le raccordement avec une conduite souple d'alimentation en air sous pression, les conduits internes desdites buses sont raccordés à ladite deuxième borne et chaque buse comporte une électrode qui est raccordée à ladite première borne et dont l'extrémité est placée légèrement en retrait par rapport à l'extrémité libre de la buse pour créer avec la paroi de la première canalisation métallique un arc électrique et réaliser un échauffement local de la paroi et une découpe au moyen d'un plasma d'arc.

Selon encore un autre mode particulier de réalisation, le dispositif comprend au moins une deuxième borne disposée sur une face frontale de la tête pour permettre le raccordement avec une conduite souple d'alimentation en oxygène et au moins une troisième borne disposée sur une face frontale de la tête pour permettre le raccordement avec une conduite souple d'alimentation en gaz combustible, et chacune des buses comprend au moins des premier et deuxième conduits internes raccordés respectivement auxdites deuxième et troisième bornes pour acheminer l'oxygène et le gaz combustible dans une zone de combustion située à l'extrémité libre de ladite borne pour réaliser une découpe de la paroi de la première canalisation par oxycoupage.

Dans ce cas, le gaz combustible est avantageusement de l'acétylène.

Pour réaliser un oxycoupage, les deux conduits internes de la buse sont avantageusement coaxiaux, le premier pouvant être situé sur l'axe de symétrie de la buse pour assurer l'arrivée du gaz combustible tel que de l'acétylène et le second conduit entourant le premier pour amener l'oxygène vers la zone de fusion.

Le moyen d'entraînement peut être prévu pour tirer au moins la tête de découpe à l'intérieur de la première canalisation grâce à un câble fixé sur l'élément d'accrochage prévu à l'avant de la tête de découpe.

Par ailleurs, le moyen d'entraînement peut comprendre un dispositif de poussée agissant au moins sur la tête de découpe à l'intérieur de ladite première canalisation.

Afin d'augmenter la vitesse de découpe, le moyen d'entraînement peut comprendre à la fois des moyens de traction et des moyens de poussée agissant au moins sur ladite tête de découpe à l'intérieur de la première canalisation.

La tête de découpe peut être équipée de plus de deux buses, et peut comprendre par exemple quatre buses réparties sur le pourtour de la surface latérale de la tête de découpe et orientées vers la paroi interne de la première canalisation, chacune des buses étant reliée, par au moins un conduit interne à la tête de découpe à ladite borne raccordée audit moyen d'alimentation.

Avantageusement, le dispositif comprend un dispositif de mesure d'épaisseur de la première canalisation à découper disposé en amont desdites buses et des moyens de réglage automatique de la profondeur de la découpe provoquée par lesdites buses en fonction des résultats de ladite mesure d'épaisseur. Le réglage de la profondeur de découpe peut être obtenu par exemple en faisant varier la pression du fluide et/ou la vitesse de déplacement du dispositif.

Il ressort de ce qui précède, que la présente invention permet de remplacer in situ des tuyauteries, notamment métalliques dans des situations pour lesquelles il était impossible jusqu'ici d'utiliser les dispositifs existants, en particulier dans le cas où les tuyauteries ont été réparées et présentent dés surépaisseurs, des cordons de soudure additionnels.

De plus, selon la présente invention, l'étape d'écartement et d'introduction du nouveau tube peut être faite bien après l'étape de découpe puisque la canalisation est découpée de façon nette et propre sans création de petits fragments, de sorte que les moyens de découpe et de tubage peuvent être introduits séparément dans la tubulure. Il est ainsi possible d'adopter une meilleure organisation du travail avec une première équipe spécialisée dans le travail de découpe des canalisations existantes et une deuxième équipe spécialisée dans le travail de mise en place des nouvelles canalisations, chaque équipe travaillant à son rythme.

Enfin, il est à noter que la progression du dispositif de découpe selon l'invention se fait sans à-coups, de façon régulière si bien que le matériel se dégrade moins vite et qu'aucune vibration ou secousse ne vient perturber le milieu environnant pendant les opérations.

Dans le cas d'une découpe de canalisations métalliques, par projection d'un fluide non homogène, ou d'une découpe par plasma qui se prête facilement à un réglage de la hauteur de la flamme, il est particulièrement avantageux d'assurer un réglage en fonction de l'épaisseur du tube à découper, ce qui permet de réaliser un travail de découpe à la fois précis et sans danger pour les autres canalisations éventuellement enterrées à proximité de la canalisation à remplacer.

D'autres caractéristiques et avantages de la présente invention apparaîtront mieux à la lecture de la description qui va suivre, faite en référence aux dessins annexés sur lesquels :

- la figure 1 est une vue schématique d'ensemble en élévation d'un premier exemple de dispositif de remplacement de canalisation selon la présente invention,
- la figure 1A est une vue en coupe radiale d'une canalisation découpée à l'aide d'une tête de découpe d'un dispositif selon l'invention, tel que celui de la figure 1,
- les figures 2A et 2B montrent en vues de face et de côté un exemple de tête de découpe utilisable dans un dispositif tel que celui de la figure 1,
- la figure 3 est une coupe longitudinale d'un exemple de buse de découpe à flamme plasma utilisable dans une tête de découpe selon l'invention,
- les figures 4A et 4B sont des vues respectivement de face et en coupe longitudinale d'un exemple de buse d'oxycoupage utilisable dans une tête de découpe selon l'invention,
- les figures 5A à 5D sont des vues schématiques de côté montrant quatre profils d'écarteur utilisable dans un dispositif selon l'invention,
- la figure 6 est une vue en coupe longitudinale d'un exemple particulier d'écarteur,
- la figure 7 est une vue en coupe longidutinale d'un exemple de moyens d'accrochage d'une nouvelle canalisation à l'arrière d'un dispositif d'écartement,
- la figure 8 est une vue schématique d'ensemble en élévation d'un second exemple de dispositif de remplacement de canalisation selon la présente invention,
- la figure 9A est une vue en coupe radiale d'une canalisation découpée totalement à l'aide d'une tête de découpe d'un dispositif selon l'invention, tel que celui de la figure 8,
- la figure 9B est une vue en coupe radiale d'une canalisation découpée partiellement à l'aide d'une tête de découpe d'un dispositif selon l'invention, tel que celui de la figure 8,
- les figures 10A et 10B montrent en vues de face et de côté un exemple de tête de découpe utilisable dans un dispositif tel que celui de la figure 8,
- la figure 11 est une coupe longitudinale d'un exemple de buse de découpe au jet d'eau pure utilisable dans une tête de découpe selon l'invention, et
- la figure 12 est une coupe longitudinale d'un exemple de buse de découpe au jet abrasif utilisable dans une tête de découpe selon l'invention.

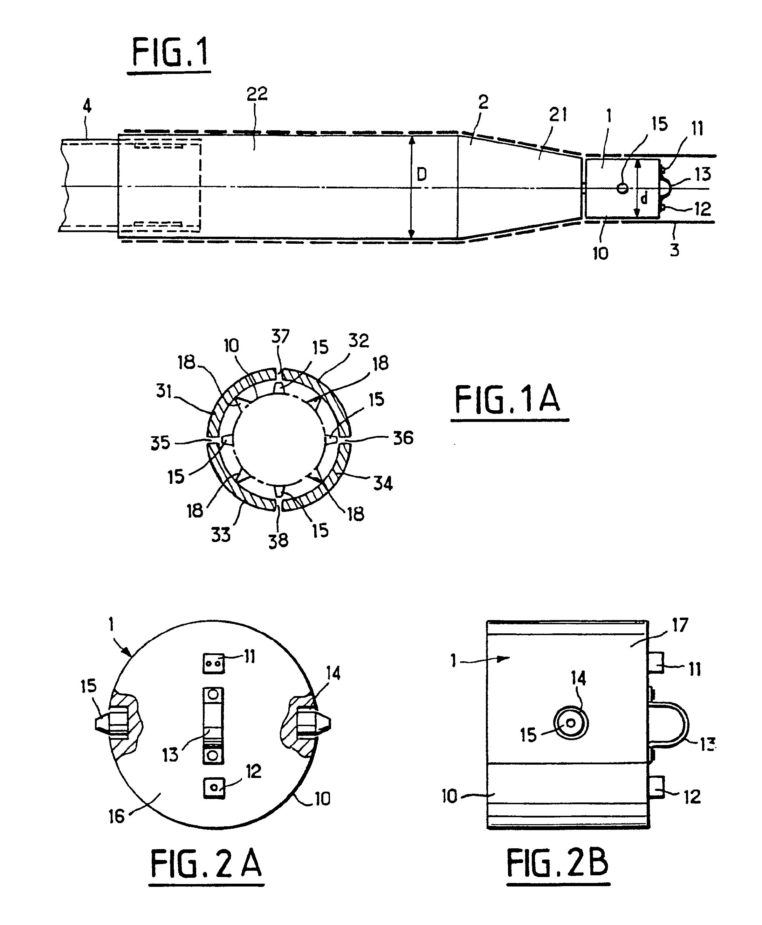

Comme il apparaît sur la figure 1, le dispositif de remplacement de canalisations enterrées selon l'invention, est essentiellement constitué de moyens de découpe 1 réalisés sous la forme d'une tête de découpe 10 et d'un dispositif écarteur 2. Le tube à remplacer 3 qui, dans la plupart des cas est métallique, est divisé longitudinalement en segments, par la tête de découpe 10 afin de permettre, après écartement des segments, qu'un nouveau tube 4 de diamètre égal ou supérieur au tube à remplacer 3 puisse être introduit à la place de l'ancien, sans qu'il soit nécessaire de procéder au retrait du tube ancien 3. Par "nouveau tube", il faut ici entendre soit le tube définitif qui remplace le tube d'origine et peut être en un matériau différent du tube d'origine, soit un fourreau dans lequel sera ultérieurement introduit le tube définitif.

Sur la figure 1, on voit une tête de découpe 10 introduite dans la canalisation existante 3 pour réaliser des découpes longitudinales de cette canalisation par un échauffement localisé du métal réalisé à l'aide de buses 15 portées par la surface latérale de la tête de découpe 10, et dirigées vers la face interne de la paroi de la canalisation 3, l'échauffement localisé étant effectué à une température supérieure ou égale à la température de fusion du métal de la paroi de la canalisation existante 3. La tête de découpe 10 est déplacée à l'intérieur du tube 3 par exemple en étant tractée par un câble fixé à un crochet 13 placé sur la face frontale avant de la tête de découpe 10. Les buses 15, qui peuvent comprendre deux buses diamétralement opposées ou de préférence trois ou quatre buses réparties à la périphérie de la tête de découpe 10 sur la face latérale cylindrique de celle-ci, provoquent la découpe longitudinale de la canalisation 3 au fur et à mesure de la progression de la tête de découpe 10 à l'intérieur de la canalisation 3. La figure 1A montre, dans le cas d'une tête de découpe 10, représentée de façon schématique en pointillés, et comportant quatre buses 15 réparties en croix et quatre nervures de positionnement 18 intercalées entre les buses à la périphérie de la tête de découpe 10, la formation de quatre segments de canalisation 31 à 34 séparés les uns des autres par des fentes longitudinales 35 à 38 formées à l'aide des buses 15.

La tête de découpe 10 peut être utilisée seule dans une première étape de simple division de la canalisation existante en segments, sans véritable fracturation ou écartement des segments formés, un écarteur 2 étant introduit ultérieurement dans la canalisation existante fendue, dans une deuxième étape, pour écarter et le cas échéant diviser encore les segments de canalisation 3, le nouveau tube 4 à mettre en place étant lui-même accroché à la partie arrière de l'écarteur 2. Toutefois, comme cela est représenté sur la figure 1, l'écarteur 2 peut être fixé directement à l'arrière de la tête de découpe 10 et peut alors comprendre une partie avant sensiblement tronconique 21 dont la plus petite section correspond sensiblement à la section de la tête de découpe 10 de diamètre d et un corps cylindrique 22 dont la section présente un diamètre D supérieur au diamètre du nouveau tube 4 dont la partie avant peut elle-même être fixée à la partie arrière du corps 22 de l'écarteur 2.

Les figures 2A et 2B présentent un mode particulier de réalisation d'une tête de découpe 10 selon l'invention, plus particulièrement adaptée à la mise en oeuvre d'un procédé de découpe par plasma d'arc. Sur la face avant 16 de la tête 10 se trouvent une borne de connexion électrique 11 à laquelle peut être connecté un câble d'alimentation électrique et une autre borne 12 pouvant être connectée à une conduite souple d'amenée d'air comprimé. Un anneau d'accrochage 13 auquel peut par exemple être fixé un câble relié à un élément de traction, est également monté sur la face avant 16 de la tête 10.

On notera toutefois que les bornes 11 et 12 pourraient aussi bien être disposées sur la face frontale arrière de la tête de découpe 10, le câble connecté à la borne 11 et la conduite raccordée à la bobine 12 étant alors introduits dans la conduite 3 par l'ouverture située à l'arrière de la tête de découpe 10.

Dans la face latérale 17 de la tête 10, deux évidements 14 diamétralement opposés forment chacun un logement pour une buse 15 de découpe qui se projette radialement légèrement au-delà du corps 10 de la tête elle-même.

Le type de buse utilisé dépend du procédé de découpage adopté.

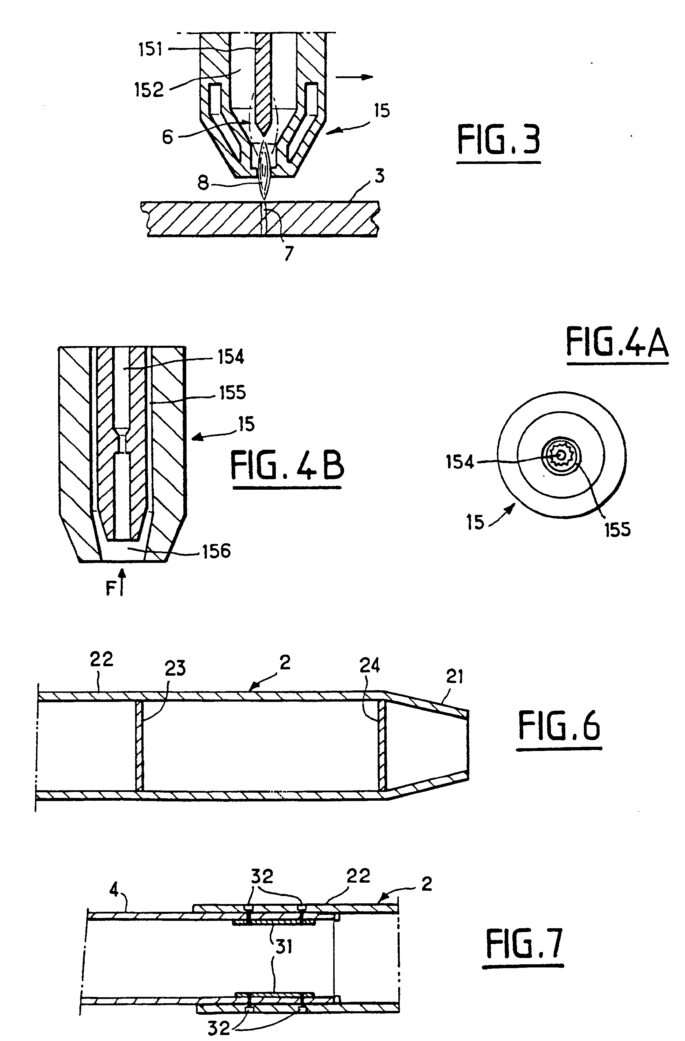

La figure 3 montre en coupe longitudinale une buse utilisée dans la technique de découpe par flamme plasma. Cette buse 15 présente une électrode centrale 151 alimentée en énergie électrique à partir de la borne 11, et un conduit 152 qui entoure l'électrode 151 et amène de l'air sous pression au niveau de la zone de découpe 7. Un arc électrique 8 est créé entre l'électrode 151 et la conduite métallique 3 à découper, ce qui échauffe localement le métal au-delà de sa température de fusion.

L'air comprimé 6 joue à la fois le rôle de gaz plasmagène et de fluide de refroidissement de la buse 15 en éloignant les calories produites par l'arc électrique 8.

A titre d'exemples, des découpes ont été réalisées avec une pression d'air de $6 \times 10^5$ Pa, une tension d'alimentation électrique de 220 volts et une intensité de courant de 36 ampères; sur des tuyauteries ayant les caractéristiques suivantes :

| Matériau | Diamètre extérieur | Epaisseur |
|---|---|---|
| Fonte grise | 123 mm | 5,2 mm |
| Fonte ductile | 118 mm | 4 mm |
| Acier | 114,3 mm | 3,6 mm |

Dans ces cas particuliers, les vitesses de découpe obtenues sont de l'ordre de 1cm/s. Un avantage de la technique de découpe par plasma ainsi décrite réside en ce que la hauteur de la flamme, est facilement réglable et adaptable à l'épaisseur et au matériau à découper. Il suffit de disposer un dispositif de mesure d'épaisseur de la canalisation 3 sur la tête 10 ou juste en amont de celle-ci et d'asservir les paramètres de réglage de la hauteur de la flamme et donc de profondeur de la découpe à l'épaisseur mesurée. Le mesureur d'épaisseur de la paroi de canalisation peut être par exemple un dispositif à ultrasons. Le réglage automatique de la profondeur de découpe permet de garantir que les canalisations éventuellement enterrées au voisinage de la canalisation 3 ne subiront elles-mêmes aucun dommage.

Selon un autre mode de réalisation possible, on utilise pour la découpe la technique d'oxycoupage. Dans ce cas, on peut utiliser une buse 15 telle que celle représentée sur les figures 4A et 4B. Cette buse 15 est constituée de deux éléments tubulaires coaxiaux définissant deux conduits d'amenée de gaz. L'un des conduits 154, qui peut être disposé au centre de la buse 15 est destiné à amener un gaz combustible tel que de l'acétylène tandis que le second conduit 155 qui peut être annulaire sert à l'amenée d'oxygène. Ces deux conduits 154, 155 débouchent dans une zone de combustion 156 située à l'extrémité de la buse 15. Bien entendu, une borne supplémentaire d'arrivée de gaz doit être prévue sur la tête de découpe 10, par exemple sur la face avant 16 pour être raccordée à une conduite souple d'alimentation en gaz combustible.

Les exemples numériques suivants montrent de façon non limitative des possibilités de mise en oeuvre de la technique d'oxycoupage. Avec de l'oxygène sous pression de $10^5$Pa et de l'acétylène sous pression $10^4$Pa, des tuyauteries ayant les caractéristiques suivantes ont pu être découpées en segments avec des vitesses de découpe d'environ 0,1cm/s.

| Matériau | Diamètre extérieur | Epaisseur |
|---|---|---|
| Fonte grise | 123 mm | 5,2 |
| Fonte ductile | 118 mm | 4 |
| Acier | 114,3 mm | 3,6 |
| Acier revêtu de polyéthylène | 114,3 mm | 5,6 |

On voit en particulier que le procédé de découpe s'applique aussi bien à des fontes ductiles qu'à des fontes cassantes et que des variations de constitution d'une même canalisation, par exemple du fait de tronçons séparés, ne gênent pas le bon déroulement du procédé de découpe.

La tête de découpe 10 peut également être adaptée pour mettre en oeuvre une technique de coupage à l'aide d'un faisceau laser. Dans ce cas, les buses 15 ne servent pas à la fourniture de courants gazeux avec création d'arcs ou de flammes, mais servent simplement à orienter un faisceau laser, créé par un générateur laser incorporé dans la tête de découpe 10 ou disposé à proximité de celle-ci, vers la paroi de la canalisation 3 à découper et diviser en segments pour permettre ensuite l'écartement des segments. L'utilisation d'une technique de coupage au laser conduit à un résultat semblable à celui qui peut être obtenu par les autres procédés déjà décrits et permet ainsi de découper une canalisation 3 par exemple de la façon représentée sur la figure 1A. Le découpage au faisceau laser est cependant de préférence utilisé pour des canalisations 3 dont l'épaisseur de paroi ne dépasse pas environ 6 mm.

Il est également possible de mettre en oeuvre des techniques de forage thermique, qui permettent des progressions rapides, même pour des parois de forte épaisseur, ou encore un procédé de découpe au chalumeau à poudre de fer qui permet d'avoir une combustion plus forte qu'un simple chalumeau.

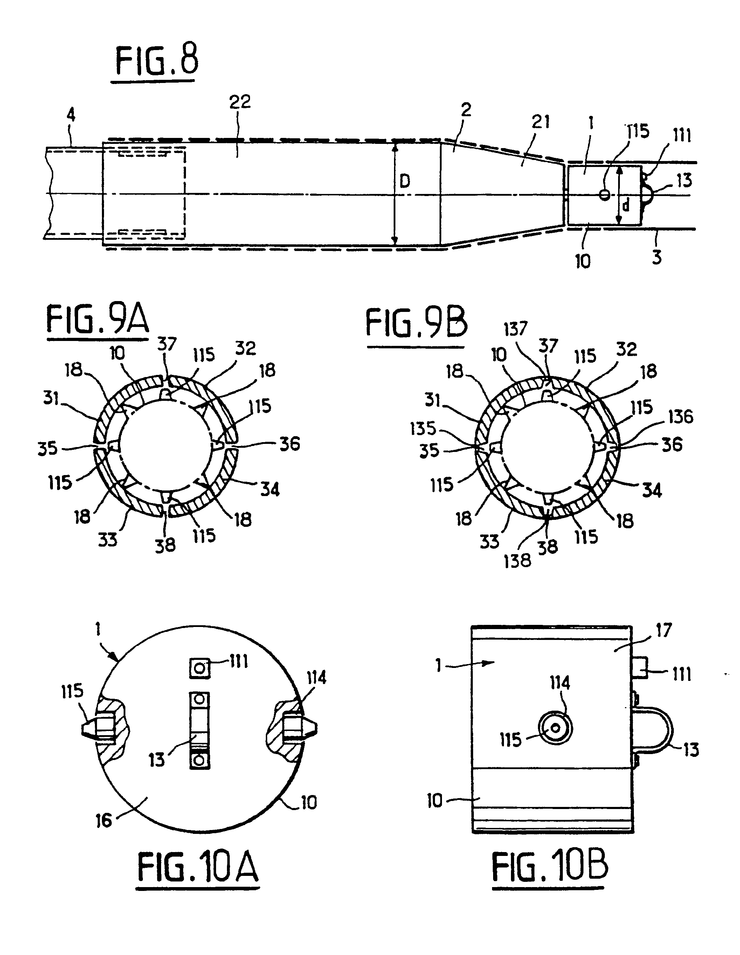

Sur la figure 8, on voit une tête de découpe 10 introduite dans la canalisation existante 3 qui est très semblable à la tête de découpe 10 de la figure 1 mais est destinée à réaliser des découpes longitudinales de cette canalisation par une projection localisée d'un fluide sous pression réalisée à l'aide de buses 115 portées par la surface latérale de la tête de découpe 10, et dirigées vers la face interne de la paroi de la canalisation 3. Comme dans le cas de la figure 1, la tête de découpe 10 est déplacée à l'intérieur du tube 3 par exemple en étant tractée par un câble fixé à un crochet 13 placé sur la face frontale avant de la tête de découpe 10. Les buses 115, qui peuvent comprendre deux buses diamétralement opposées ou de préférence trois ou quatre buses réparties à la périphérie de la tête de découpe 10 sur la face latérale cylindrique de celle-ci, provoquent la découpe longitudinale de la canalisation 3 au fur et à mesure de la progression de la tête de découpe 10 à l'intérieur de la canalisation 3. La figure 9A montre, dans le cas d'une tête de découpe 10, représentée de façon schématique en pointillés, et comportant quatre buses 115 réparties en croix et quatre nervures de positionnement 18 intercalées entre les buses à la périphérie de la tête de découpe 10, la formation de quatre segments de canalisation 31 à 34 séparés les uns des autres par des fentes longitudinales 35 à 38 formées à l'aide des buses 115. Comme dans le cas des modes de réalisation précédemment décrits, la découpe ainsi obtenue peut soit affecter toute l'épaisseur du tube 3 (figure 9A), soit n'affecter qu'une partie de l'épaisseur du tube 3 (figure 9B). Dans ce dernier cas, la découpe partielle localise la rupture qui sera créée par l'écarteur 2 et annule totalement le risque d'endommagement d'une canalisation voisine par le fluide sous pression. Dans le cas d'une découpe partielle, les fentes longitudinales 35 à 38 définissent des rainures dont les fonds 135 à 138 constituent des éléments de liaison de faible épaisseur pouvant être facilement rompus lors du passage ultérieur d'un moyen d'écartement à l'intérieur de la canalisation (figure 9B).

Les figures 10A et 10B présentent un mode particulier de réalisation d'une tête de découpe 10 selon l'invention. Sur la face avant 16 de la tête 10 se trouve une borne 111 pouvant être connectée à une conduite souple d'amenée de fluide. Un anneau d'accrochage 13 auquel peut par exemple être fixé un câble relié à un élément de traction, est également monté sur la face avant 16 de la tête 10.

On notera toutefois que la borne 111 pourrait aussi bien être disposée sur la face frontale arrière de la tête de découpe 10, la conduite raccordée à la borne 111 étant alors introduite dans la conduite 3 par l'ouverture située à l'arrière de la tête de découpe 10.

Dans la face latérale 17 de la tête 10, deux évidements 114 diamétralement opposés forment chacun un logement pour une buse 115 de découpe qui se projette radialement légèrement au-delà du corps 10 de la tête elle-même.

Le type de buse utilisé dépend du procédé de découpage adopté (pression et nature du fluide, diamètre du jet de fluide,..)

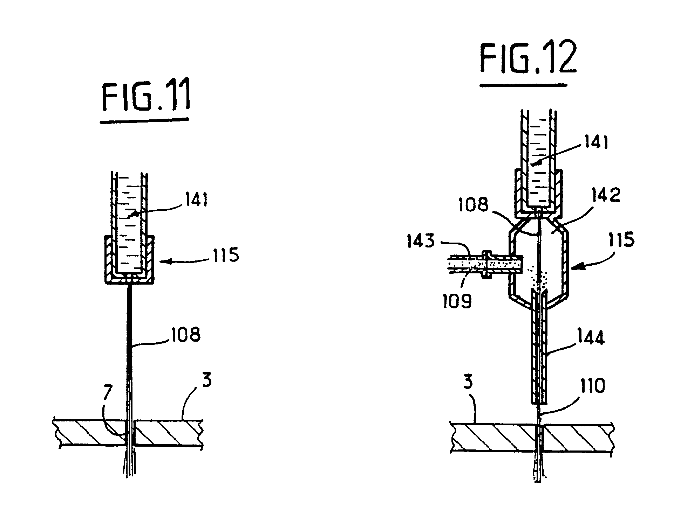

La figure 11 montre en coupe longitudinale une buse utilisée dans la technique de découpe par eau pure sous pression. Cette buse 115 présente un conduit 141 qui amène de l'eau pure (eau filtrée) sous pression au niveau de la zone de découpe 7. Un jet d'eau 108 est créé entre la buse 115 et la conduite 3, ce qui découpe localement la conduite.

L'eau sous pression 108 joue à la fois le rôle d'agent coupant et de fluide nettoyant en éloignant les particules produites par la découpe de la conduite.

Pour s'adapter au matériau à découper, la pression de l'eau peut atteindre 4000 bars, tandis que le diamètre du jet est généralement compris entre 0,1 mm et 0,5 mm.

A titre d'exemples, des découpes ont été réalisées sur des tubes en matière plastique (polyéthylène) avec de l'eau pure sous pression dans les configurations suivantes:

| Epaisseur | Vitesse de découpe |
|-----------|--------------------|
| 3 mm | 3 m/min |
| 10 mm | 1 m/min |

Selon un autre mode de réalisation de l'invention, un mélange d'eau et de particules abrasives, peut être utilisé comme moyen de découpe. Dans ce cas, une buse telle que représentée sur la figure 12 peut être utilisée ; l'eau pure sous pression est amenée sous forme d'un jet 108 au niveau d'un petit caisson de mélange 142 situé à la sortie du conduit d'eau 141. Un autre conduit 143 amène des particules abrasives 109 également au niveau du caisson de mélange 142. La vitesse élevée du jet d'eau 108 crée un vide dans le caisson de mélange 142. Les particules abrasives 109 amenées dans le caisson 142 grâce au vide ainsi créé se mélangent avec le jet d'eau 108, formant ainsi un jet abrasif 110. Le jet abrasif 110, créé entre la buse 115 et la conduite 3, découpe localement la conduite.

Avantageusement, un conduit supplémentaire 144 peut être prévu à la sortie du caisson de mélange 142, afin de rendre le jet plus directif.

Selon ce mode de réalisation la pression de l'eau peut atteindre 3000 bars et le diamètre du jet abrasif est généralement compris entre 0,8 et 2,0 mm.

Les exemples numériques suivants montrent de façon non limitative les caractéristiques des découpes obtenues grâce au mode particulier de réalisation de l'invention utilisant un mélange d'eau et de particules abrasives.

| Matériau | Epaisseur | Vitesse de découpe |
|---|---|---|
| Matière plastique (polyéthylène) | 15 mm | 1 m/min |
| Acier | 5 mm | 0,24 m/min |
| | 10 mm | 0,12 m/min |
| Fonte | 5 mm | 0,6 m/min |
| Aluminium | 5 mm | 0,6 m/min |
| | 10 mm | 0,3 m/min |
| Plastique renforcé de fibres | 6 mm | 0,5 m/min |
| Plomb | 5 mm | 2,4 m/min |

Comme il apparaît sur les figures 1 et 8, la tête de découpe 1 peut être reliée par tout moyen de liaison connu en soi à un moyen d'écartement 2, destiné à écarter la tuyauterie 3 une fois que celle-ci a été divisée en segments.

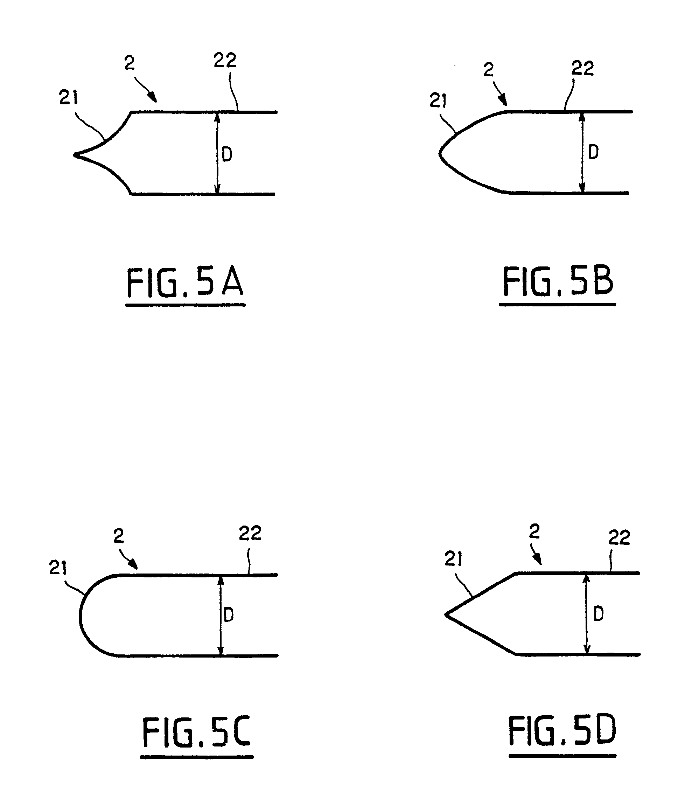

Les figures 5A à 5D montrent différentes formes possibles pour l'écarteur 2 qui a toujours pour fonction d'augmenter la section de la tuyauterie 3 d'un diamètre initial d à un diamètre final D.

La figure 5A montre un écarteur 2 présentant une pointe 21 sensiblement conique mais présentant une concavité tournée vers l'intérieur. L'écarteur 2 de la figure 5B présente une pointe 21 également sensiblement conique mais avec une convexité tournée vers l'extérieur. Sur la figure 5C, l'écarteur 2 présente une extrémité avant 21 arrondie. Enfin, sur la figure 5D l'écarteur 2 présente une pointe 21 réellement conique.

Les écarteurs 2 des figures 5A à 5D peuvent être utilisés de façon combinée avec la tête de découpe 10 en étant disposés à une distance prédéterminée derrière celle-ci, ou être utilisés dans une deuxième étape en étant par exemple tractés ou poussés à l'intérieur de la canalisation 3 déjà divisée en segments, d'une façon indépendante de la progression de la tête de découpe 10.

Le prolongement arrière 22 de l'écarteur 2 est dans tous les cas essentiellement cylindrique, de diamètre D. Sur ce prolongement 22 est fixé, par tout moyen connu en soi, soit le tube de remplacement 4 définitif qui véhiculera le fluide ou le gaz à transporter, soit un fourreau de protection à l'intérieur duquel sera mis en place le tube définitif.

La figure 6 montre un exemple d'écarteur tubulaire 2 muni d'entretoises radiales 23, 24 destinées à renforcer la structure de l'écarteur 2. Naturellement, si l'écarteur 2 est rattaché directement à l'arrière de la tête de découpe 10, comme dans le dispositif des figures 1 et 8, et si les bornes 11, 12 ou 111, de raccordement à des sources d'énergie ou de fluide sont disposées sur la face frontale arrière de la tête de découpe 10, les entretoises 23, 24 sont munies des ouvertures nécessaires pour permettre le passage des câbles ou conduites souples introduites par l'arrière de l'écarteur 2.

La figure 7 montre un exemple de dispositif d'accrochage d'un nouveau tube 4 à l'extrémité arrière de la partie cylindrique 22 de l'écarteur 2. Des moyens de liaison tels que des vis, tiges filetées ou boulons 32 dont la tête est noyée dans la paroi de l'écarteur 2 traversent la paroi de l'extrémité avant du nouveau tube 4 et sont engagées par leur extrémité dans des éléments de retenue 31 tels que des écrous ou barrettes munies de trous taraudés, disposés à l'intérieur de l'extrémité avant de la nouvelle canalisation 4.

On décrira maintenant de façon générale un procédé selon l'invention pour effectuer le remplacement d'un

EP 0 444 974 A1

tube enterré par un tube de diamètre supérieur ou égal au tube d'origine.

La première étape consiste à introduire à l'intérieur de la tuyauterie existante 3 au moins une tête de découpe telle que la tête de découpe 10 décrite ci-dessus. Cette tête de découpe 10 peut être tractée par tout moyen connu en soi, comme par exemple par un dispositif tel que celui décrit dans le document FR-B-2 552 346 relatif à un appareil à déplacement autonome pour sa progression à l'intérieur d'une canalisation, mais la tête 10 peut également être entraînée à l'aide d'un câble à partir de moyens de traction situés à l'extérieur de la canalisation 3. L'opération de découpe a lieu simultanément à l'avancement de la tête 10 dans la canalisation 3, grâce aux buses 115 décrites précédemment. Lorsque deux buses de découpe sont utilisées, leur translation parallèlement à l'axe de la tuyauterie est suffisante pour assurer la découpe en deux demi coques. Cette première étape peut par exemple être faite par une première équipe, puis, une seconde équipe peut, quelque temps plus tard, réaliser la seconde étape qui consiste à écarter les fragments de la canalisation d'origine découpée partiellement ou totalement. En effet, la découpe par projection, qui évite l'apparition de vibrations, permet de conserver l'intégralité de la tuyauterie après découpe totale ou partielle de celle-ci. La conduite 3 divisée longitudinalement en segments qui ne s'effritent pas, peut rester plusieurs heures, voire quelques jours sans risquer de s'obstruer par des fragments.

Naturellement, les découpes peuvent ne pas être rigoureusement longitudinales et si la tête de découpe 10 présente un certain mouvement de rotation, les découpes peuvent être hélicoïdales sans que les opérations ultérieures soient modifiées.

La seconde étape consiste à déplacer l'écarteur 2 à l'intérieur de la tuyauterie fragmentée, afin d'augmenter la section de passage et d'introduire soit le tube définitif 4 soit un fourreau 4 dans lequel sera inséré ultérieurement le tube définitif. Bien entendu, l'écartement de l'ancien tube et l'introduction du nouveau tube sont deux opérations simultanées car le nouveau tube est fixé au prolongement arrière 22 de l'écarteur 2. Tout véhicule ou robot tracteur peut convenir pour tirer l'écarteur 2 et le tube de remplacement. S'il est jugé que la puissance du véhicule tracteur n'est pas suffisante, un second moyen de déplacement peut être prévu afin de pousser l'écarteur et la tuyauterie de remplacement.

Ce second moyen peut également être utilisé dans le cas où la découpe, l'écartement et l'introduction d'un nouveau tube sont réalisés en une seule passe.

Comme cela a déjà été indiqué, le dispositif selon l'invention peut être avantageusement muni d'un élément de mesure de l'épaisseur de la canalisation existante, par exemple constitué par un système à ultrasons, qui transmet cette mesure à un élément de décision qui lui-même permet de régler automatiquement la profondeur de la découpe en fonction de l'épaisseur à découper.

Le procédé selon l'invention, dont une caractéristique essentielle réside dans le fait qu'une découpe de la canalisation ancienne est effectuée par l'action localisée d'un flux de particules, de matière ou de rayonnement, est particulièrement souple dans sa mise en oeuvre et notamment permet facilement de réaliser une découpe partielle sans qu'il soit nécessaire d'effectuer des réglages délicats. En effet, une découpe partielle peut être obtenue à l'aide d'une simple augmentation de la vitesse de déplacement de la buse de découpe par rapport à la surface à découper. Dans ce cas, la buse ne reste pas suffisamment longtemps à un endroit donné pour avoir le temps de découper la totalité de l'épaisseur de la canalisation.

Comme cela a été indiqué plus haut, les flux de particules, de matière ou de rayonnement peuvent être très divers.

Ainsi, le coupage au plasma fait appel à un flux de matière gazeuse (le gaz plasmagène qui peut être de l'air) et un flux de particules (le déplacement des électrons qui créent l'échauffement localisé sous l'action d'une différence de potentiel électrique entre la buse de découpage et la canalisation se traduisant par un arc électrique.

L'oxycoupage fait appel à deux flux de matière gazeuse (oxygène et gaz combustible).

La projection d'un jet d'eau pure sous pression fait appel à un flux de matière liquide (l'eau éventuellement additionnée d'un additif pour rendre le jet plus cohérent).

La projection d'un jet d'eau abrasif sous pression fait appel à un flux de matière liquide (l'eau) et un flux de particules abrasives (poudre d'origine minérale par exemple.

La projection d'un rayon laser fait appel à un flux de rayonnement se traduisant par une onde associée à un flux de particules (les photons) compte tenu de la dualité ondulatoire et copusculaire de la lumière.

En pratique, le procédé de découpe localisée par plasma d'arc est particulièrement bien adapté aux canalisations métalliques.

Le procédé de découpe localisée par projection de jet d'eau pure sous pression est bien adapté aux canalisations en matière plastique, telle que par exemple le polyéthylène ou le polychlorure de vinyle.

Le procédé de découpe localisée par projection d'un jet d'eau abrasif sous pression est bien adapté aux canalisations métalliques ou minérales.

## Revendications

1. Procédé de remplacement d'une première canalisation (3) enterrée, telle qu'une canalisation en matière métallique, plastique ou minérale, par une seconde canalisation (4) de diamètre moyen sensiblement égal ou supérieur à celui de ladite première canalisation, selon lequel des moyens de découpe (1) sont déplacés à l'intérieur de la première canalisation (3) afin de diviser longitudinalement ladite première canalisation (3) en au moins deux segments,
caractérisé en ce qu'il consiste à découper ladite première canalisation sur au moins une partie de son épaisseur (3), par l'action localisée d'un flux de particules, de matière ou de rayonnement sur ladite première canalisation (3) grâce à des moyens (1) de projection localisée qui sont déplacés à l'intérieur de la première canalisation (3) afin de procéder à ladite division longitudinale de ladite première canalisation (3) en au moins deux segments.

2. Procédé selon la revendication 1, caractérisé en ce qu'il consiste en outre à écarter et le cas échéant diviser lesdits segments découpés de ladite première canalisation (3) afin de permettre l'introduction de ladite seconde canalisation (4) destinée à remplacer ladite première canalisation.

3. Procédé selon la revendication 2, caractérisé en ce que l'écartement des segments découpés de la première canalisation (3) est réalisé immédiatement après l'opération de découpe par projection localisée, au cours d'une même étape au cours de laquelle on fait progresser simultanément à l'intérieur de la première canalisation (3) des moyens (1) de projection localisée et des moyens d'écartement (2).

4. Procédé selon la revendication 2, caractérisé en ce que l'on réalise la découpe de la première canalisation (3) par projection localisée lors d'une première étape au cours de laquelle on fait progresser à l'intérieur de la première canalisation (3) des moyens (1) de projection localisée, et on réalise l'écartement des segments découpés de ladite première canalisation (3) lors d'une étape ultérieure séparée de mise en place de la seconde canalisation (2), l'écartement des segments découpés étant réalisé à l'aide d'un moyen d'écartement (2) introduit séparément dans la première canalisation après lesdits moyens (1) de projection localisée et progressant à l'intérieur de la première canalisation découpée de façon indépendante desdits moyens (1) de projection localisée.

5. Procédé selon l'une quelconque des revendications 2 à 4, caractérisé en ce qu'il consiste à insérer dans ladite première canalisation (3) fragmentée et écartée, un fourreau de protection dont la tête est tractée derrière ledit moyen d'écartement (2) puis à introduire à l'intérieur dudit fourreau, dans une étape ultérieure, ladite seconde canalisation définitive (4) à mettre en place.

6. Procédé selon l'une quelconque des revendications 2 à 4, caractérisé en ce qu'il consiste à insérer directement dans ladite première canalisation (3) fragmentée et écartée, ladite seconde canalisation (4) définitive à mettre en place, dont la tête est tractée derrière ledit moyen d'écartement (2).

7. Procédé selon l'une quelconque des revendications 1 à 6, caractérisé en ce que la projection localisée produisant le découpage de ladite première canalisation est réalisée par un jet directif (108) d'eau sous pression.

8. Procédé selon l'une quelconque des revendications 1 à 6, caractérisé en ce que la projection localisée produisant le découpage de ladite première canalisation est réalisée par un jet directif (110) constitué d'un mélange d'eau et de particules abrasives sous pression.

9. Procédé selon l'une quelconque des revendications 1 à 6, caractérisé en ce que la projection localisée produisant le découpage de ladite première canalisation est réalisée par un flux d'oxygène gazeux et un flux de combustible gazeux selon un procédé d'oxycoupage.

10. Procédé selon l'une quelconque des revendications 1 à 6, caractérisé en ce que la projection localisée produisant le découpage de ladite première canalisation est réalisée par un flux de matière gazeuse et un flux d'électrons selon un procédé de coupage au plasma d'arc.

11. Procédé selon l'une quelconque des revendications 1 à 6, caractérisé en ce que la projection localisée produisant le découpage de ladite première canalisation est réalisée par un rayonnement de lumière cohérente selon un procédé de coupage par faisceau laser.

**12.** Procédé selon l'une quelconque des revendications 1 à 6, caractérisé en ce que la projection localisée produisant le découpage de ladite première canalisation est réalisée par un procédé de forage thermique.

**13.** Procédé selon l'une quelconque des revendications 1 à 6, caractérisé en ce que la projection localisée produisant le découpage de ladite première canalisation est réalisée par un flux de matière gazeuse et de particules selon un procédé utilisant un chalumeau à poudre de fer.

**14.** Dispositif pour la mise en oeuvre du procédé selon la revendication 1, comprenant des moyens de découpe (1), des moyens d'écartement (2) et des moyens d'entraînement, caractérisé en ce que lesdits moyens de découpe (1) comprennent une tête (10) essentiellement cylindrique pourvue sur sa surface latérale (17), d'au moins deux buses (15; 115) de découpe dont l'extrémité libre est orientée vers la paroi interne de ladite première canalisation (3),en ce que lesdites buses(15; 115) sont pourvues d'au moins un conduit interne (152, 154, 155; 141) destiné à diriger vers la surface à découper un moyen de découpe locale constitué par un flux de particules, de matière ou de rayonnement (8; 108; 110), au moins une borne (11, 12; 111) étant prévue sur une face frontale (16) de ladite tête (10) pour permettre le raccord avec au moins un moyen d'alimentation desdites buses (15; 115).

**15.** Dispositif selon la revendication 14, caractérisé en ce que ladite borne (111) disposée sur une face frontale (16) de la tête (10) est destinée à permettre le raccordement avec une conduite d'alimentation en fluide et en ce que le fluide de découpe locale dirigé à travers les buses (115) vers la paroi interne de la première canalisation (3) est un jet d'eau directif (108).

**16.** Dispositif selon l'une quelconque des revendications 14 ou 15, caractérisé en ce que ladite borne (111) disposée sur une face frontale (16) de la tête (10) est destinée à permettre le raccordement avec une conduite d'alimentation en fluide et en ce que le fluide de découpe locale dirigé à travers les buses (115) vers la paroi interne de la première canalisation (3) est un jet directif constitué d'un mélange d'eau et de particules abrasives.

**17.** Dispositif selon la revendication 16, caractérisé en ce que ladite buse (115) comprend en outre un caisson de mélange (142), un conduit (143) d'arrivée de particules abrasives et un conduit (144) destiné à diriger le mélange eau-particules abrasives vers la zone à découper, lesdits conduits (141, 143) véhiculant respectivement l'eau et les particules abrasives aboutissant dans ledit caisson de mélange (142) où un vide est créé.

**18.** Dispositif selon la revendication 14, caractérisé en ce qu'il comprend au moins une borne (11) disposée sur une face frontale (16) de la tête (10) pour permettre le raccordement avec un câble d'alimentation en énergie électrique et en ce que le moyen de découpe locale dirigé à travers les buses (15) vers la paroi interne de la première canalisation (3) est un faisceau laser.

**19.** Dispositif selon la revendication 14, caractérisé en ce qu'il comprend au moins une première borne (11) disposée sur une face frontale (16) de la tête (10) pour permettre le raccordement avec un câble d'alimentation en énergie électrique et au moins une deuxième borne (12) disposée sur une face frontale (16) de la tête (10) pour permettre le raccordement avec une conduite souple d'alimentation en air sous pression, en ce que les conduits internes (152) desdites buses (15) sont raccordés à ladite deuxième borne (12) et en ce que chaque buse (15) comporte une électrode (151) qui est raccordée à ladite première borne et dont l'extrémité est placée légèrement en retrait par rapport à l'extrémité libre de la buse (15) pour créer avec la paroi de la première canalisation métallique (3) un arc électrique et réaliser un échauffement local de la paroi et une découpe au moyen d'un plasma d'arc.

**20.** Dispositif selon la revendication 14, caractérisé en ce qu'il comprend au moins une deuxième borne (12) disposée sur une face frontale (16) de la tête (10) pour permettre le raccordement avec une conduite souple d'alimentation en oxygène et au moins une troisième borne disposée sur une face frontale (16) de la tête (10) pour permettre le raccordement avec une conduite souple d'alimentation en gaz combustible et en ce que chacune des buses (15) comprend au moins des premier et deuxième conduits internes (154, 155) raccordés respectivement auxdites deuxième et troisième bornes pour acheminer l'oxygène et le gaz combustible dans une zone de combustion (156) située à l'extrémité libre de ladite borne (15) pour réaliser une découpe de la paroi de la première canalisation (3) par oxycoupage.

21. Dispositif selon la revendication 20,caractérisé en ce que le gaz combustible est de l'acétylène.

22. Dispositif selon l'une des revendications 14 à 21, caractérisé en ce que la tête de découpe comprend au moins un élément d'accrochage (13) situé sur la face frontale avant (16) de la tête (10) pour permettre la traction de ladite tête de découpe (10) par lesdits moyens d'entraînement.

23. Dispositif selon l'une des revendications 14 à 22, caractérisé en ce que lesdits moyens d'écartement (2) comprennent une partie avant (21) essentiellement conique ou tronconique et un prolongement arrière cylindrique (22) de diamètre (D) supérieur au diamètre (d) de la tête de découpe (10).

24. Dispositif selon l'une des revendications 14 à 23, caractérisé en ce que lesdits moyens d'entraînement tirent au moins ladite tête de découpe (1) à l'intérieur de la première canalisation (3) grâce à un câble fixé sur ledit élément d'accrochage (13).

25. Dispositif selon l'une quelconque des revendications 14 à 23, caractérisé en ce que lesdits moyens d'entraînement comprennent un dispositif de poussée agissant au moins sur ladite tête de découpe (1) à l'intérieur de ladite première canalisation (3).

26. Dispositif selon l'une quelconque des revendications 14 à 23, caractérisé en ce que lesdits moyens d'entraînement comprennent à la fois des moyens de traction et des moyens de poussée agissant au moins sur ladite tête de découpe (1) à l'intérieur de la première canalisation (3).

27. Dispositif selon l'une quelconque des revendications 14 à 26, caractérisé en ce que la tête de découpe (1) est équipée de quatre buses (15; 115) réparties sur le pourtour de la surface latérale de la tête de découpe et orientées vers la paroi interne de la première canalisation (3), chacune des buses étant reliée, par au moins un conduit interne à la tête de découpe (1) à ladite borne raccordée audit moyen d'alimentation.

28. Dispositif selon l'une quelconque des revendications 14 à 27, caractérisé en ce qu'il comprend un dispositif de mesure d'épaisseur de la première canalisation (3) à découper disposé en amont desdites buses, et des moyens de réglage automatique de la profondeur de la découpe provoquée par lesdites buses en fonction des résultats de ladite mesure d'épaisseur.

29. Procédé selon l'une quelconque des revendications 1 à 13, caractérisé en ce que la projection localisée d'un flux de particules, de matière ou de rayonnement sur la première canalisation (3) est réalisée de manière à provoquer une découpe totale de la paroi de la canalisation (3).

30. Procédé selon l'une quelconque des revendications 1 à 13, caractérisé en ce que la projection localisée d'un flux de particules, de matière ou de rayonnement sur la première canalisation (3) est réalisée de manière à n'assurer une découpe que sur une partie de l'épaisseur de la paroi de la canalisation (3), de manière à maintenir entre les segments de la première canalisation (3) des éléments de liaison de faible épaisseur (135 à 138) pouvant être facilement rompus lors du passage ultérieur d'un moyen d'écartement (2) à l'intérieur de ladite canalisation (3).

FIG.1

FIG.1A

FIG.2 A

FIG.2B

151

152

6

8

7

3

15

**FIG.3**

154

155

15

**FIG.4B**

156

F

154

155

15

**FIG.4A**

22    23    2    24    21

**FIG.6**

4    32    22    2

31

32

**FIG.7**

15

FIG.5A

FIG.5B

FIG.5C

FIG.5D

## FIG.8

## FIG.9A

## FIG.9B

## FIG.10A

## FIG.10B

FIG.11

FIG.12

Office européen
des brevets

**RAPPORT DE RECHERCHE EUROPEENNE**

Numero de la demande

EP 91 40 0152

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | EP-A-0094694 (BRITISH GAS CORP.)<br>* le document en entier * | 1-3, 5-6 | F16L55/165<br>E21B7/28<br>E21B43/114 |
| A | | 14-16, 23 | |
| A | US-A-4134453 (LOVE ET AL.)<br>* le document en entier * | 1, 7-8, 14-16, 22, 27, 29 | |
| A | GB-A-2213904 (KURIMOTO LTD)<br>* abrégé; figures * | 24-26 | |
| A | EP-A-0318153 (DASPIT)<br>* abrégé; figures * | 13 | |
| A | US-A-3711076 (GOETZ)<br>* abrégé; figures *<br>* colonne 4, lignes 53 - 58 * | 9, 20-21 | |
| A | US-A-4162383 (HAMASAKI)<br>* abrégé; figures *<br>* colonne 4, lignes 45 - 50 * | 10, 19 | DOMAINES TECHNIQUES RECHERCHES (Int. Cl.5)<br><br>F16L<br>E21B<br>B23K |
| A | DE-C-3614196 (BAUMANN)<br>* abrégé * | 7-8 | |
| A | US-A-4806726 (ROSA ET AL.)<br>* colonne 4, lignes 25 - 34 * | 11 | |

Le présent rapport a été établi pour toutes les revendications

| Lieu de la recherche | Date d'achèvement de la recherche | Examinateur |
|---|---|---|
| LA HAYE | 02 MAI 1991 | NARMINIO A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)